# EUROPÄISCHE PATENTSCHRIFT

(11) **EP 1 128 241 B1**
(45) Veröffentlichungstag und Bekanntmachung des Hinweises auf die Patenterteilung: **11.10.2006**
(21) Anmeldenummer: 01100230.0
(22) Anmeldetag: 03.01.2001
(51) Int. Cl.: G05B 19/042, G05B 23/02

(54) **Verfahren und Vorrichtung zur Sicherheitsüberwachung einer Steuereinrichtung**
Method and device for safety monitoring of a control device
Procédé et dispositif de surveillance d' un dispositif de commande

(30) Priorität: 23.02.2000 DE 10008434
(43) Veröffentlichungstag der Anmeldung: 29.08.2001
(73) Patentinhaber: PHOENIX CONTACT GmbH & Co. Kg, 32825 Blomberg (DE)
(72) Erfinder: Horn, Steffen, Dipl.-Ing., 32816 Schieder-Schwalenberg (DE)
(74) Vertreter: Blumbach - Zinngrebe

(56) Entgegenhaltungen:
- EP-A- 0 908 805
- DE-A- 3 502 387
- DE-A- 19 720 618
- US-A- 5 696 495

## Beschreibung

Die Erfindung betrifft ein Verfahren zur Sicherheitsüberwachung einer Steuerungseinrichtung in einer Automatisierungseinrichtung gemäß Anspruch 1 und eine Vorrichtung zur Sicherheitsüberwachung einer Steuerungseinrichtung in einer Automatisierungseinrichtung gemäß Anspruch 12.

Steuerungseinrichtungen werden zunehmend eingesetzt, um insbesondere großtechnische Prozesse oder Abläufe, etwa bei industrieller Herstellung oder Endmontage, zu steuern oder zu regeln. Ebenso werden sie zur Überwachung solcher weitestgehend automatisiert betriebenen Vorgänge wie auch zur Veranschaulichung des momentanen Prozeßstadiums benutzt.

Entsprechende Automatisierungseinrichtungen oder automatisierte Anlagen haben aufgrund des damit möglichen hohen Produktivitätsgrades eine herausragende Stellung nicht nur in der industriellen Fertigung erlangt. So haben Automatisierungseinrichtungen etwa bei Verarbeitungsvorgängen mit einer hohen menschlichen Gesundheitsbelastung oder gar einem großen Gefahrenpotential Eingang gefunden. Zudem sind das Durchführen großchemischer Prozesse oder der Umgang mit radioaktiven Materialien ohne Automatisierung nahezu unmöglich geworden.

Derartige Automatisierungseinrichtungen weisen daher im allgemeinen zumindest Abschnitte oder Komponenten auf, an welche hohe und höchste Anforderungen im Hinblick auf die Sicherheit zu stellen sind. Beispielsweise muß sichergestellt sein, daß bestimmte Maschinen innerhalb vorgegebener Betriebsparameter betrieben werden oder es muß verhindert werden, daß eine Maschine läuft, obwohl sich eine Person in deren Arbeitsbereich aufhält. In dieser Hinsicht darf beispielsweise eine Drehmaschine weder eine vorgegebene Drehzahl überschreiten noch darf sich beim Betrieb eines Roboters eine Person im Aktionsradius des Roboters aufhalten.

Weiterhin muß beim Betrieb einer Automatisierungseinrichtung sichergestellt sein, daß die betriebene Anlage bei einem Ausfall einer Systemkomponente nicht in einen undefinierten, nicht vorhersagbaren oder sogar einen unkontrollierbaren Zustand gerät.

Ein Ansatz zur Lösung dieser Probleme nach dem Stand der Technik besteht darin, insbesondere die sicherheitsrelevanten Komponenten des Systems mehrkanalig, d.h. redundant aufzubauen. Beispielsweise kann in einer Automatisierungseinrichtung vorgesehen sein, Sicherheitsbuskomponenten, d.h. z.B. Busteilnehmer, die einer sicherheitsrelevanten Maschine zugeordnet sind, doppelt auszuführen. Gleichzeitig kann auch die zentrale Steuerung und der Bus mehrkanalig aufgebaut sein oder gar eine von der Prozeßsteuerung getrennte spezielle und unter Umständen redundant aufgebaute Sicherheitssteuerung zur Steuerung der sicherheitsrelevanten Komponenten vorgesehen sein.

Diese Sicherheitssteuerung führt im Wesentlichen die Verknüpfungen der sicherheitsbezogenen Eingangsinformationen durch und übermittelt daraufhin, beispielsweise über einen Automatisierungsbus, sicherheitsbezogene Verknüpfungsdaten an Ausgangskomponenten. Die Ausgangskomponenten ihrerseits bearbeiten die empfangenen Sicherheitsmaßnahmen und geben diese nach positiver Prüfung an periphere Einheiten oder Geräte aus. Darüber hinaus schalten sie ihre Ausgänge in einen sicheren Zustand, wenn sie einen Fehler feststellen oder innerhalb einer vorgegebenen Zeitdauer keine gültigen Daten mehr empfangen haben.

Der Einsatz von zwei Steuerungen im System, d.h. eine Prozeßsteuerung sowie die beschriebene Sicherheitssteuerung, hat jedoch einige Nachteile zur Folge. Gerade aufgrund steigender Anforderungen an die Reaktionszeit von Automatisierungseinrichtungen muß ein derartiges System häufig auf Sicherheitsinseln aufgeteilt werden. Weiterhin treten insbesondere bei mehrkanaligen Steuerungssystemen Synchronisationsprobleme auf, welche trotz einer prinzipiell intakten Anlage zu Ausfällen oder gar zu Zerstörungen von Maschinenteilen oder ganzer Maschinen führen können. Weiterhin zieht der mehrkanalige Aufbau durch den vergrößerten Hardware-Aufwand eine Erhöhung der System- als auch der Wartungskosten nach sich.

Aus DE 198 15 150 A1 ist eine Anordnung von Sensoren zur Überwachung eines Arbeitsgerätes bekannt, welches eine an einen Bus angeschlossene Auswerteeinheit umfasst, die fortlaufend über das Bussystem übertragene Signale abhört. Das Arbeitsgerät wird nur in Betrieb gesetzt, wenn eine fehlerfreie Identifizierung von Kodierungen, die über das Bussystem übertragen werden, vorliegt. Hierzu werden die durch den Busteilnehmer an einen Master gesandten Eingangsdaten ausgewertet und das Arbeitsgerät unter Ansprechen auf die Auswertung eingeschaltet oder ausgeschaltet belassen. Ein derartiger Ansatz ist zwar nicht so kostenintensiv, dafür aber sehr unflexibel hinsichtlich einer Erweiterung des Systems oder eine Anpassung der Anlage an andere Buskomponenten.

Auch die Druckschrift DE 35 02 387 beschreibt ein Verfahren zur Überwachung von Mikroprozessorsystemen und speicherprogrammierbaren Steuerungen, bei dem eine Kontrolleinheit direkt an den Systembus des Mikroprozessorsystems oder der speicherprogrammierbaren Steuerung angeschlossen ist. Dieses Verfahren beruht auf einem Vergleich der über den Systembus übertragenen Daten mit Daten, welche in sogenannten Kontrollpunkten gespeichert sind. Ein hierbei stattfindender Soll/Istwert-Vergleich in der Kontrolleinheit ermöglicht die Erkennung von Fehlfunktionen und erzeugt ein Fehlersignal, welches ein Anhalten eines mit dem Mikroprozessorsystem oder der speicherprogrammierbaren Steuerung verbundenen Systems bewirkt. Bei diesem Verfahren liegt zwar eine Trennung des Steuerungsvorganges vom Überwachungsvorgang vor. Nachteilig ist allerdings, dass die Kontrolle im Wesentlichen auf gespeicherter Information beruht.

US-A-5 696 495 beschreibt eine Einrichtung zur Überwachung und Steuerung einer komplexen Installationskonstruktion von einer lokalen oder entfernten Stelle aus. Jede der funktionalen komponenten der Installation weist einen mit ihr verbundenen Slave-Prozessor auf, also mit einer Master- und zusätzlichen Prozessoreinheit gekoppelt sind.

Der Erfindung liegt daher die Aufgabe zugrunde, ein Verfahren und eine Vorrichtung zur Sicherheitsüberwachung einer Steuerungseinrichtung in einer Automatisierungseinrichtung so zu gestalten, dass die Steuerung und auch die Sicherungsfunktion, unabhängig von einer Trennung der beiden Funktionen, durch eine redundante dezentrale Überprüfung gesichert wird und in Abhängigkeit vom Ergebnis der Überprüfung eine Sicherungsfunktion direkt eingeleitet werden kann.

Zur Lösung dieser Aufgabe dienen die Merkmale der Ansprüche 1 und 12.

Die Erfindung bringt als Vorteil ein erhöhtes Maß an Sicherheit mit sich. Besonders vorteilhaft ist die Vermeidung von fehlerhaft ausgelösten Sicherungsfunktionen durch einen internen Kontrollmechanismus innerhalb der Sicherheitsüberwachung.

Weitere vorteilhafte Merkmale ergeben sich aus den Unteransprüchen.

Das erfindungsgemäße Verfahren zur Sicherheitsüberwachung einer Steuerungseinrichtung in einer Automatisierungseinrichtung umfasst die im folgenden aufgeführten Schritte. Es werden Eingangsdaten in eine zentrale Überwachungseinrichtung eingelesen und aus diesen werden in der zentralen Überwachungseinrichtung erste Ausgangsdaten berechnet. Die ersten Ausgangsdaten und die Eingangsdaten werden zu einer dezentralen Überwachungseinrichtung übertragen. In der dezentralen Überwachungseinrichtung werden aus den Eingangsdaten zweite Ausgangsdaten berechnet. Erfindungsgemäß werden die ersten mit den zweiten Ausgangsdaten in der dezentralen Überwachungseinrichtung verglichen. Bei einer zumindest teilweisen Übereinstimmung der ersten und zweiten Ausgangsdaten werden als Ergebnis des Vergleichs die ersten Ausgangsdaten an wenigstens eine der dezentralen Überwachungseinrichtung zugeordnete Einrichtung ausgegeben.

Die erfindungsgemäße Vorrichtung zur Sicherheitsüberwachung einer Steuerungseinrichtung in einer Automatisierungseinrichtung umfasst eine zum Einlesen von Eingangsdaten und Berechnen von ersten Ausgangsdaten aus den Eingangsdaten ausgebildete, zentrale Überwachungseinrichtung und eine zum Einlesen der Eingangsdaten und/oder der ersten Ausgangsdaten ausgebildete wenigstens eine dezentrale Überwachungseinrichtung. Dabei weist die wenigstens eine dezentrale Überwachungseinrichtung ein Berechnungselement zur Berechnung von zweiten Ausgangsdaten aus den Eingangsdaten auf. Erfindungsgemäß ist die wenigstens eine dezentrale Überwachungseinrichtung der wenigstens einen Einrichtung zugeordnet. Weiterhin ist in der dezentralen Überwachungseinrichtung eine Vergleichseinheit zum Vergleichen der ersten mit den zweiten Ausgangsdaten vorgesehen. Die erfindungsgemäße Vorrichtung enthält ebenso eine mit der Vergleichseinheit gekoppelte Ausgabeeinrichtung, welche die ersten Ausgangsdaten bzw. zweiten Ausgangsdaten bei einer Übereinstimmung als Ergebnis des Vergleichs der ersten und zweiten Ausgangsdaten an die wenigstens eine Einrichtung ausgibt. Desweiteren ist auch eine Auslöseeinrichtung vorgesehen, die bei einer Nicht-Übereinstimmung der ersten und zweiten Ausgangsdaten als Ergebnis des Vergleichs aktiviert wird, um eine sicherheitsbezogene Funktion auszulösen.

Der Grad und die Genauigkeit der teilweisen Übereinstimmung bzw. der teilweisen Nichtübereinstimmung der ersten und zweiten Ausgangsdaten kann erfindungsgemäß über das Bereitstellen eines fehlerreduzierten Codes beeinflusst werden. Somit ist eine nahezu absolute Sicherheit erreichbar. Die Fehlerreduzierung bei den Eingabedaten kann durch den Einsatz von Kontrollroutinen oder Filteralgorithmen erbracht werden.

Die sicherheitsbezogene Funktion kann eine Wiederholung einzelner und/oder aller oben angegebenen Verfahrensschritte sein. Dabei können Eingangsdaten und/oder die ersten Ausgangsdaten erneut übertragen werden. Ebenso ist es im Rahmen der Erfindung vorgesehen, das Berechnen der ersten und/oder zweiten Ausgangsdaten aus den Eingangsdaten zu wiederholen. Dabei schließt sich erneut der Vorgang des Vergleichens an. Abhängig vom Ergebnis des erneut durchgeführten Vergleichs müssen einige oder alle Schritte erneut wiederholt werden.

In einer bevorzugten Ausführungsform der Erfindung ist es aber auch vorgesehen, dass die sicherheitsbezogene Funktion ein Überführen einer einzelnen Einrichtung in einen geordneten Zustand, d.h einen entweder zeitlich begrenzten oder bis zur nächsten Aktivierung andauernden Stand-by-Zustand sowie eine komplette Abschaltung der Einrichtung umfasst. Auch die Abschaltung kann mit einer vorgegebenen Abschaltzeit gekoppelt werden. Die sicherheitsbezogene Funktion kann aber auch ein Beenden eines Automatisierungsvorgangs umfassen, in dem mehrere Einrichtungen automatisiert betrieben werden.

Von der dezentralen Überwachungseinrichtung werden Ausgangsdaten in vorteilhafter Weise über das Bussystem zu einer an das Bussystem angeschlossenen Einrichtung, wie etwa einem Roboter, übertragen. Dort lösen sie eine bestimmte Wirkung, wie etwa die Wiederholung eines Automatisierungsvorganges, aus. Als Automatisierungsvorgang ist etwa die Bewegung eines Roboterarmes oder das Beenden einer Bewegung des Roboters zu verstehen.

Erfindungsgemäß werden derartige sicherheitsbezogene Funktionen der Art und Ausführung der Einrichtung sowie dem mit ihrem Betrieb verbundenen Gefahrenpotential angepasst.

In einer Ausführungsform der vorliegenden Erfindung wird das Übertragen der ersten Ausgangsdaten und der Eingangsdaten zu einer dezentralen Überwachungseinrichtung über ein Bussystem vollzogen. Es ist aber auch möglich, die Übertragung direkt auszuführen.

Das Berechnen der ersten Ausgangsdaten kann erfindungsgemäß analog zum Berechnungsvorgang für die zweiten Ausgangsdaten sein. Denkbar ist allerdings auch eine Variation der jeweiligen Berechnungsvorgänge in den unterschiedlichen Überwachungseinrichtungen. Die zentrale und dezentrale Überwachungseinrichtung können gemäß der Erfindung fest verdrahtet sein.

Auch ist es im Rahmen der Erfindung vorgesehen, die Überwachungseinrichtungen über elektronische Bauelemente oder Schaltungselemente zu realisieren. Es können jedoch auch wesentliche Elemente der Überwachungseinrichtungen oder die gesamten Überwachungseinrichtungen als speziell programmierbare Mikro- oder Signalprozessoren ausgebildet sein. Hierbei ergibt sich als Vorteil, eine Änderung der Überwachungseinrichtungen durch einen Eingriff in den programmierten Algorithmus relativ einfach durchzuführen.

Auch im Gedanken der Erfindung ist eine unterschiedliche Ausführung der zentralen und der dezentralen Überwachungseinrichtungen. So kann wahlweise eine der beiden Überwachungseinrichtungen vollständig aus programmierbaren Mikro- oder Signalprozessoren aufgebaut sein oder als einheitliche Ausführung in Form von elektronischen Bauelementen eher hardwaregesteuert gestaltet sein. Denkbar ist aber auch eine Kombination davon. So können beide Überwachungseinrichtungen gemäß der angeführten Varianten gleichartig ausgeführt sein.

Im Rahmen der Erfindung ist es inbegriffen, dass die Einrichtungen als Steuerungseinrichtungen für Fertigungsprozesse, Industrieroboter und/oder Sortier- oder Trennvorgänge, wie sie beispielsweise im großtechnischen Maßstab automatisiert auftreten, ausgeführt sind.

Die Erfindung beinhaltet als bevorzugte Ausführungsform eine dezentrale Überwachungseinrichtung, die als Modul nachträglich in eine Automatisierungseinrichtung eingebracht und entsprechend den vorstehend angeführten Schritten verwendbar ist.

Die Erfindung wird nachfolgend in Verbindung mit den beiliegenden Zeichnungen an einem Ausführungsbeispiel näher erläutert. Es zeigen darin:
- Fig. 1: das Blockschaltbild eines unter Anwendung des erfindungsgemäßen Verfahrens bzw. unter Einsatz einer erfindungsgemäßen Vorrichtung betriebenen Automatisierungssystems,
- Fig. 2: den schematischen Datenfluß einer zentralen Überwachungseinrichtung,
- Fig. 3: eine schematische Darstellung des Übertragungsprotokolls einer dezentralen Überwachungseinrichtung.

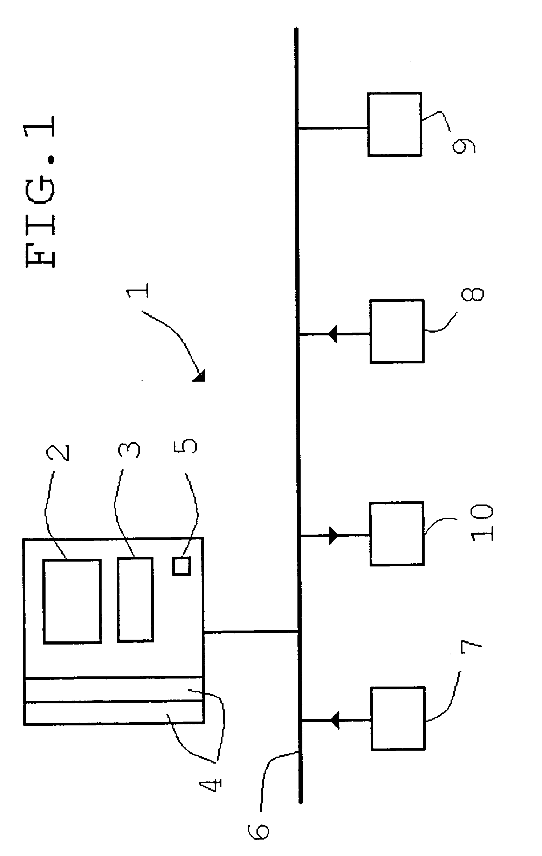

Nach Fig. 1 weist die Automatisierungseinrichtung 1 eine Steuerung 2 und eine zentrale Überwachungseinrichtung 3 auf. Die Automatisierungseinrichtung 1 enthält direkte Ein- und Ausgabeeinheiten (I/O-Einheiten) 4 sowie einen seriellen Busanschluß 5. Alle für die Steuerung und/oder Überprüfung des Automatisierungsprozesses notwendigen Daten können erfindungsgemäß direkt über die Ein- und Ausgabeeinheiten 4 oder den seriellen Busanschluß 5 zur Automatisierungseinrichtung 1 übertragen bzw. von dieser ausgegeben werden. Über den seriellen Busanschluß 5 ist die Automatisierungseinrichtung 1 mit einem Bussystem 6 verbunden. An dem Bussystem 6 sind Eingabeeinheiten 7, 8 oder Eingabeschnittstellen für die Dateneingabe vorgesehen. Des Weiteren ist das Bussystem 6 so ausgelegt, daß es über eine dezentrale Überwachungseinrichtung, die vorzugsweise als Ausgabe-Überwachungseinrichtung 9 ausgeführt ist, eine periphere, in der Fig. 1 nicht gezeigte Einrichtung ansteuert. Das Bussystem 6 besitzt nach Fig. 1 eine weitere Einheit 10, mit der Daten ausgegeben werden können.

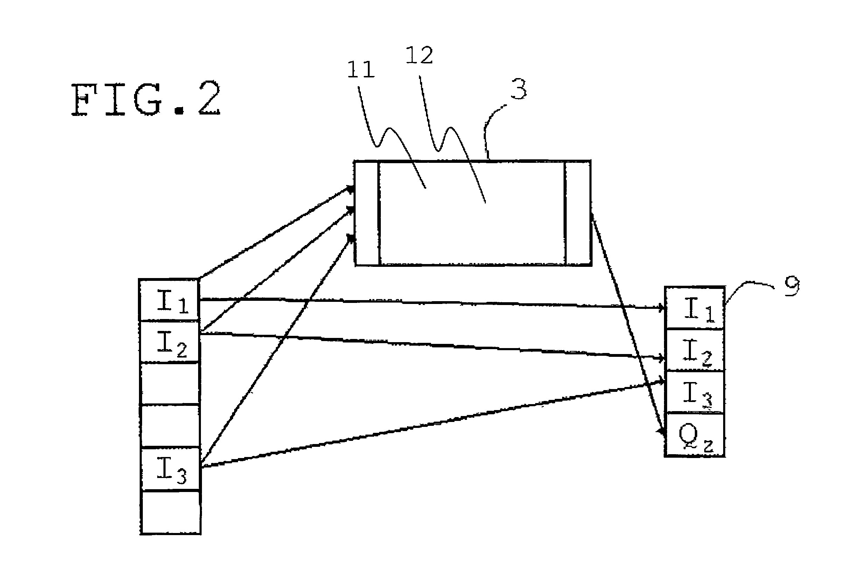

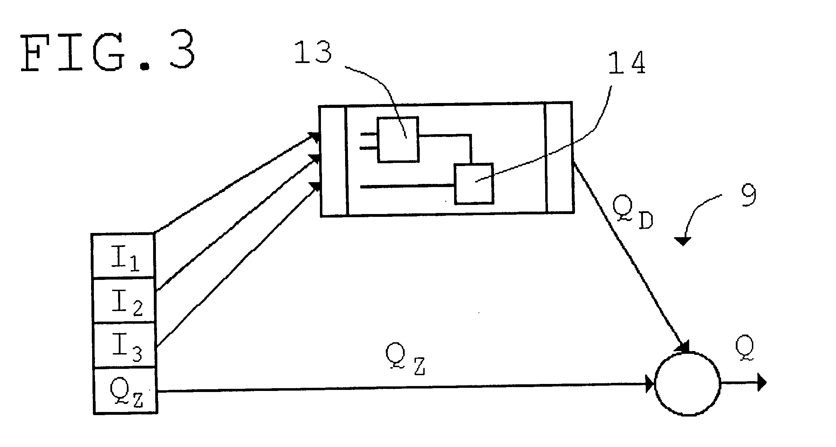

Das erfindungsgemäße Verfahren bzw. die Funktionsweise der erfindungsgemäßen Vorrichtung wird im Wesentlichen wie folgt vorgenommen und anhand der folgenden Figuren 2 und 3 erläutert.

Zuerst werden sicherheitsrelevante Eingangsdaten eingelesen. Dies sind Daten, welche den sicheren Betrieb von Einrichtungen gewährleisten, die über die Automatisierungseinrichtung angesteuert bzw. damit betrieben werden. Dies geschieht erfindungsgemäß vorzugsweise über die Einheiten 7 und/oder 8. Die sicherheitsrelevanten Eingangsdaten (I1, I2, I3) können auch direkt, wie in Fig. 1 gezeigt, an die Automatisierungseinrichtung 1 gegeben werden. Die zentrale Überwachungseinrichtung 3, die vorzugsweise direkt in der Automatisierungseinrichtung 1 vorgesehen ist, erhält nun die sicherheitsrelevanten Eingangsdaten I1 - I3.

Die zentrale Überwachungseinrichtung 3 berechnet aus den Eingangsdaten nun die für den gesamten Automatisierungsprozeß sicherheitsrelevanten ersten Ausgangsdaten Q_{Z}. Die eingelesenen Eingangsdaten I1 - I3 werden nun gemeinsam mit den errechneten Ausgangsdaten Q_{Z} zu der dezentralen Ausgabe-Überwachungseinrichtung 9 übertragen. Nach Fig. 2 werden die lokal (I1) oder über den seriellen Busanschluß (I2, I3) in die zentrale Überwachungseinrichtung 3 eingegebenen Daten mit Hilfe von logischen Operatoren 11, 12 miteinander zu den Ausgangsdaten Q_{Z} kombiniert, die in einem vorgegebenen Ausgabeprotokoll ebenfalls an die dezentrale Ausgabe-Überwachungseinrichtung 9 gegeben werden.

Nach Fig. 3 berechnet die dezentrale Ausgabe-Überwachungseinrichtung 9 dann aus den dieser übergebenen Eingangsdaten I1 - I3 ein lokales Ausgangsdatum Q_{D}, wobei numehr Operatoren 13, 14 und/oder logische Einheiten innerhalb dieser dezentralen Ausgabe-Überwachungseinrichtung 9 zum Einsatz kommen. Erfindungsgemäß umfaßt die dezentrale Ausgabe-Überwachungseinrichtung 9 einen Vergleichsoperator, der die von der zentralen Überwachungseinrichtung 3 übertragenen Ausgangsdaten Q_{Z} mit den zweiten Ausgangsdaten Q_{D} vergleicht.

Stimmen die von der zentralen Überwachungseinrichtung 3 berechneten Ausgangsdaten mit den lokal berechneten Ausgangsdaten Q_{D} überein, so werden diese an eine periphere Einrichtung zur Steuerung, z.B. zum Abschalten der peripheren Einrichtung abgegeben. Im Falle der Nichtübereinstimmung der in den beiden unterschiedlichen Überwachungseinrichtungen berechneten Ausgangsdaten Q_{Z} und Q_{D} liegt ein Fehler bei der Datenübertragung und/oder bei einem der Berechnungs- oder Überwachnungsalgorithmen vor. Die dezentrale Ausgabe-Überwachungseinrichtung 9 initialisiert nun weitere Wiederholungen des Berechnungs- bzw. Vergleichsvorgangs oder auch eine Wiederholung des Datenübertragungsvorgangs.

So kann anders als nach Fig. 1 die dezentrale Ausgabe-Überwachungseinrichtung 9 mehrere periphere Einrichtungen ansteuern. In einer solchen Ausführungsform ist es vorgesehen, die Berechnung und Ausgabe der Ausgangsdaten Q_{D} den angeschlossenen peripheren Einrichtungen anzupassen. Es ist aber auch denkbar, jede periphere Einrichtung mit einer eigenen dezentralen Ausgabe-Überwachungseinrichtung zu verbinden, wobei dann lediglich die für die Steuerung bzw. Überwachung der peripheren Einrichtung notwendigen Daten berechnet und übertragen werden.

Die Erfindung sieht weiterhin vor, daß die dezentrale Ausgabe-Überwachungseinrichtung 9 alle zur dezentralen redundanten Überprüfung einer Sicherheitsfunktion notwendigen Informationen erhält. Dadurch wird sichergestellt, daß bei einem Ausfall der zentralen Überwachungseinrichtung 3 noch eine reduzierte Sicherheitsüberprüfung durch die dezentrale Ausgabe-Überwachungseinrichtung 9 gewährleistet ist. Desgleichen empfängt bei einer bevorzugten Ausführungsform der Erfindung auch die zentrale Überwachungseinrichtung 3 die redundanten Informationen, um gegebenenfalls dateninhärente Fehler beim Eingangsvorgang beseitigen zu können.

## Patentansprüche

1. Verfahren zur Sicherheitsüberwachung einer Steuerungseinrichtung in einer Automatisierungseinrichtung (1) umfassend:
- Einlesen von Eingangsdaten in eine zentrale Überwachungseinrichtung (3)
- Berechnen von ersten Ausgangsdaten in der zentralen Überwachungseinrichtung (3) aus den Eingangsdaten **gekennzeichnet durch**
- Übertragen der ersten Ausgangsdaten und der Eingangsdaten zu einer von wenigstens einer dezentralen Überwachungseinrichtung (9)
- Berechnen von zweiten Ausgangsdaten in der einen von wenigstens einer dezentralen Überwachungseinrichtung (9) aus den Eingangsdaten
- Vergleichen der ersten mit den zweiten Ausgangsdaten in der dezentralen Überwachungseinrichtung (9)
- Ausgeben der ersten Ausgangsdaten als Ergebnis einer zumindest teilweisen Übereinstimmung der ersten und zweiten Ausgangsdaten an wenigstens eine der dezentralen Überwachungseinrichtung (9) zugeordnete Einrichtung.

2. Verfahren nach Anspruch 1, **dadurch gekennzeichnet dass** bei zumindest teilweiser Nicht-Übereinstimmung der ersten und zweiten Ausgangsdaten eine sicherheitsbezogene Funktion ausgelöst wird.

3. Verfahren nach einem der vorstehenden Ansprüche, **dadurch gekennzeichnet, daß** die sicherheitsbezogene Funktion eine Wiederholung der Schritte des Übertragens und/oder Berechnens und/oder Vergleichens und/oder der Ausgabe umfasst.

4. Verfahren nach einem der vorstehenden Ansprüche, **dadurch**
**gekennzeichnet, daß** die sicherheitsbezogene Funktion ein Überführen einer Einrichtung in einen geordneten Zustand umfasst.

5. Verfahren nach einem der vorstehenden Ansprüche, **dadurch**
**gekennzeichnet, daß** die sicherheitsbezogene Funktion ein Ausschalten der Einrichtung umfasst.

6. Verfahren nach einem der vorstehenden Ansprüche, **dadurch**
**gekennzeichnet, daß** die sicherheitsbezogene Funktion ein Beenden eines Automatisierungsvorgangs umfasst.

7. Verfahren nach einem der vorstehenden Ansprüche, **dadurch gekennzeichnet, daß** das Übertragen der ersten Ausgangsdaten und der Eingangsdaten zu einer dezentralen Überwachungseinrichtung (9) über ein Bussystem (6) und/oder direkt vollzogen wird.

8. Verfahren nach einem der vorstehenden Ansprüche, **dadurch gekennzeichnet, daß** das Berechnen der ersten Ausgangsdaten dem Berechnen der zweiten Ausgangsdaten entspricht.

9. Verfahren nach einem der vorstehenden Ansprüche, **dadurch gekennzeichnet, daß** die zentrale und dezentrale Überwachungseinrichtung (3, 9) fest verdrahtet sind.

10. Verfahren nach einem der vorstehenden Ansprüche, **dadurch gekennzeichnet, daß** die Überwachungseinrichtungen (3, 9)durch Software gesteuert werden.

11. Verfahren nach einem der vorstehenden Ansprüche, **dadurch gekennzeichnet, daß** die Einrichtung als Steuerungseinrichtung für Fertigungsprozesse, Sortier- und/oder Trennvorgänge ausgeführt ist.

12. Vorrichtung zur Sicherheitsüberwachung einer Steuerungseinrichtung in einer Automatisierungseinrichtung (1)
- mit einer zum Einlesen von Eingangsdaten und Berechnen von ersten Ausgangsdaten aus den Eingangsdaten ausgebildeten zentralen Überwachungseinrichtung (3),
**dadurch gekennzeichnet**,
- mit wenigstens einer zum Einlesen der Eingangsdaten und/oder der ersten Ausgangsdaten ausgebildeten dezentralen Überwachungseinrichtung (9), wobei die wenigstens eine dezentrale Überwachungseinrichtung (9) ein Berechnungselement zur Berechnung von zweiten Ausgangsdaten aus den Eingangsdaten aufweist, und der wenigstens einen dezentralen Überwachungseinrichtung (9) eine Einrichtung zugeordnet ist
- mit einer Vergleichseinheit zum Vergleichen der ersten mit den zweiten Ausgangsdaten in der wenigstens einen dezentralen Überwachungseinrichtung (9),
- mit einer mit der Vergleichseinheit gekoppelten Ausgabeeinrichtung, welche die ersten Ausgangsdaten als Ergebnis einer zumindest teilweisen Übereinstimmung der ersten und zweiten Ausgangsdaten ausgibt

13. Vorrichtung nach Anspruch 12, bei welcher eine Auslöseeinrichtung eine sicherheitsbezogene Funktion bei einer zumindest teilweisen Nicht-Übereinstimmung der ersten und zweiten Ausgangsdaten auslöst.

14. Vorrichtung nach Anspruch 12 oder 13, bei welcher die zentrale Überwachungseinrichtung (3) und die dezentrale Überwachungseinrichtung (9) über ein Bussystem (6) und/oder direkt verbunden sind.

15. Vorrichtung nach einem der Ansprüche 12 bis 14, bei welcher die dezentrale Überwachungseinrichtung (3) mit der wenigstens einen Einrichtung über ein Bussystem (6) und/oder direkt verbunden ist.

16. Vorrichtung nach einem der Ansprüche 12 bis 15, **dadurch gekennzeichnet, daß** die Überwachungseinrichtungen (3, 9) programmierbare Mikro- und/oder Signalprozessoren umfassen.

## Claims

1. Method for safety monitoring of a control device in an automation device (1), consisting in:
- reading of input data into a central monitoring device (3),
- calculation of first output data in the central monitoring device (3) from the input data,
**characterised by**
- transmission of the first output data and the input data to one of at least one decentral monitoring devices (9),
- calculation of second output data in one of at least one decentral monitoring devices (9) from the input data,
- comparison of the first with the second output data in the decentral monitoring device (9),
- output of the first output data as a result of an at least partial coincidence of the first and second output data to at least one device assigned to the decentral monitoring device (9).

2. Method according to claim 1, **characterised in that** in the case of at least partial non-coincidence of the first and second output data a safety-related function is triggered.

3. Method according to one of the preceding claims,
**characterised in that** the safety-related function comprises repetition of the stages of the transmission and / or calculation and / or comparison and / or output.

4. Method according to one of the preceding claims,
**characterised in that** the safety-related function comprises a transfer of a device into an orderly state.

5. Method according to one of the preceding claims,
**characterised in that** the safety-related function comprises switching-off of the device.

6. Method according to one of the preceding claims,
**characterised in that** the safety-related function comprises ending of an automation process.

7. Method according to one of the preceding claims,
**characterised in that** the transmission of the first output data and the input data to a decentral monitoring device (9) is undertaken by means of a bus system and / or directly.

8. Method according to one of the preceding claims,
**characterised in that** the calculation of the first output data corresponds to the calculation of the second output data.

9. Method according to one of the preceding claims,
**characterised in that** the central and decentral monitoring devices (3, 9) are wired in a fixed way.

10. Method according to one of the preceding claims,
**characterised in that** the monitoring devices (3, 9) are controlled by software.

11. Method according to one of the preceding claims,
**characterised in that** the device is designed as a control device for manufacturing processes, sorting and / or separating processes.

12. Device for safety monitoring of a control device in an automation device (1)
- with a central monitoring device (3) implemented for reading input data and calculating first output data from the input data,
- with at least one decentral monitoring device (9) implemented for reading the input data and / or the first output data, whereby the at least one decentral monitoring device (9) comprises a calculating element for calculating second output data from the input data, and a device is assigned to the at least one decentral monitoring device (9).
- with a comparison unit for comparing the first with the second output data in the at least one decentral monitoring device (9),
- with an output device coupled to the comparison unit which outputs the first output data as a result of an at least partial coincidence of the first and second output data.

13. Device according to claim 12, wherein a triggering device triggers a safety-related function in the case of at least partial non-coincidence of the first and second output data.

14. Device according to claim 12 or 13, wherein the central monitoring device (3) and the decentral monitoring device (9) are connected by means of a bus system (6) and / or directly.

15. Device according to one of the clams 12 to 14, wherein the decentral monitoring devices (3) is connected to the at least one device by means of a bus system (6) and / or directly.

16. Device according to one of the claims 12 to 15, **characterised in that** the monitoring devices (3, 9) comprise programmable microprocessors and / or signal processors.

## Revendications

1. Procédé pour surveiller la sécurité d'un dispositif de commande dans un dispositif d'automatisation (1), comprenant :
- l'introduction de données d'entrée dans un dispositif de surveillance (3) centralisé
- le calcul de premières données de sortie dans le dispositif de surveillance (3) centralisé à partir des données d'entrée
**caractérisé par**
- la transmission des premières données de sortie et des données d'entrée à un d'au moins un dispositif de surveillance (9) décentralisé
- le calcul de secondes données de sortie dans l'un d'au moins un dispositif de surveillance (9) décentralisé à partir des données d'entrée
- la comparaison des premières données de sortie avec les secondes données de sortie dans le dispositif de surveillance (9) décentralisé
- l'édition des premières données de sortie comme résultat d'une concordance au moins partielle des premières et des secondes données de sortie sur au moins un dispositif attribué au dispositif de surveillance (9) décentralisé.

2. Procédé selon la revendication 1, **caractérisé en ce que**, en cas de non-concordance au moins partielle des premières et des secondes données de sortie, une fonction spécifique à la sécurité est déclenchée.

3. Procédé selon l'une des revendications précédentes, **caractérisé en ce que** la fonction spécifique à la sécurité comprend une répétition des étapes de la transmission et/ou du calcul et/ou de la comparaison et/ou de l'édition.

4. Procédé selon l'une des revendications précédentes, **caractérisé en ce que** la fonction spécifique à la sécurité comprend un passage d'un dispositif dans un état ordonné.

5. Procédé selon l'une des revendications précédentes, **caractérisé en ce que** la fonction spécifique à la sécurité comprend une déconnexion du dispositif.

6. Procédé selon l'une des revendications précédentes, **caractérisé en ce que** la fonction spécifique à la sécurité comprend un achèvement d'une opération d'automatisation.

7. Procédé selon l'une des revendications précédentes, **caractérisé en ce que** la transmission des premières données de sortie et des données d'entrée à un dispositif de surveillance (9) décentralisé est effectuée par un système de bus (6) et/ou directement.

8. Procédé selon l'une des revendications précédentes, **caractérisé en ce que** le calcul des premières données de sortie correspond au calcul des secondes données de sortie.

9. Procédé selon l'une des revendications précédentes, **caractérisé en ce que** les dispositifs de surveillance (3, 9) centralisé et décentralisé sont câblés à demeure.

10. Procédé selon l'une des revendications précédentes, **caractérisé en ce que** les dispositifs de surveillance (3, 9) sont commandés par un logiciel.

11. Procédé selon l'une des revendications précédentes, **caractérisé en ce que** le dispositif est réalisé comme un dispositif de commande pour des processus de fabrication, des opérations de tri et/ou de séparation.

12. Dispositif pour surveiller la sécurité d'un dispositif de commande dans un dispositif d'automatisation (1)
- avec un dispositif de surveillance (3) centralisé, réalisé pour l'introduction de données d'entrée et le calcul de premières données de sortie à partir des données d'entrée,
**caractérisé en ce que**,
- avec au moins un dispositif de surveillance (9) décentralisé, réalisé pour l'introduction des données d'entrée et/ou des premières données de sortie, l'au moins un dispositif de surveillance (9) décentralisé présentant un élément de calcul pour le calcul de secondes données de sortie à partir des données d'entrée, et un dispositif étant attribué à au moins un dispositif de surveillance (9) décentralisé
- avec une unité de comparaison pour la comparaison des premières données de sortie avec les secondes données de sortie dans l'au moins un dispositif de surveillance (9) décentralisé,
- avec un dispositif d'édition couplé avec l'unité de comparaison, qui édite les premières données de sortie comme résultat d'une concordance au moins partielle des premières et secondes données de sortie.

13. Dispositif selon la revendication 12, sur lequel un dispositif de déclenchement déclenche une fonction spécifique à la sécurité dans le cas d'une non-concordance au moins partielle des premières et secondes données de sortie.

14. Dispositif selon la revendication 12 ou 13, sur lequel le dispositif de surveillance (3) centralisé et le dispositif de contrôle (9) décentralisé sont reliés par un système de bus (6) et/ou directement.

15. Dispositif selon l'une des revendications 12 à 14, sur lequel le dispositif de surveillance (3) décentralisé est relié à au moins un dispositif par un système de bus (6) et/ou directement.

16. Dispositif selon l'une des revendications 12 à 15, **caractérisé en ce que** les dispositifs de surveillance (3, 9) comprennent des microprocesseurs et/ou des processeurs de signaux programmables.
